# FASCICULE DE BREVET EUROPEEN

(11) **EP 2 594 480 B1**
(45) Date de publication et mention de la délivrance du brevet: **17.12.2014**
(21) Numéro de dépôt: 12006449.8
(22) Date de dépôt: 14.09.2012
(51) Int. Cl.: B64C 27/00

(54) **Dispositif sectionneur de câbles, et aéronef**
Trennvorrichtung für Kabel und Luftfahrtzeug
Cable cutting device and aircraft

(30) Priorité: 18.11.2011 FR 1103524
(43) Date de publication de la demande: 22.05.2013
(73) Titulaire: Airbus Helicopters, 13725 Marignane Cedex (FR)
(72) Inventeur: Prudhomme-Lacroix, Pierre, 13127 Vitrolles (FR); Denante, Marc, 13007 Marseille (FR)
(74) Mandataire: GPI & Associés

(56) Documents cités:
- EP-A1- 2 165 930
- FR-A1- 2 443 309
- RU-C1- 2 253 594
- US-A- 4 760 644
- US-A- 4 826 103

## Description

La présente invention concerne un dispositif sectionneur de câbles destiné à un aéronef, et un aéronef tel qu'un giravion de type hélicoptère. L'invention se situe alors dans le domaine technique des coupe-câbles d'aéronefs.

En effet, les câbles, tels que des câbles électriques à haute tension ou des câbles téléphoniques, constituent un danger redoutable pour les hélicoptères.

Du fait de la nature de leur mission, les hélicoptères sont amenés à voler à faible altitude et risquent à tout moment d'entrer en collision avec un câble. Même si le pilote de l'hélicoptère est particulièrement attentif, il reste difficile d'apercevoir un câble de un ou deux centimètres de diamètre, par exemple.

Durant un vol d'avancement, l'hélicoptère risque donc de heurter un câble. Dans ce cas de figure, le câble glisse le long du cockpit puis vient en contact avec le mât rotor ou encore le train d'atterrissage ce qui peut conduire à une situation catastrophique.

Les constructeurs ont alors mis en oeuvre sur les giravions des dispositifs aptes à sectionner un câble en vol pour protéger leurs appareils en cas de heurt.

On connaît par le document US 4407467 un premier dispositif muni d'une structure à l'avant de l'hélicoptère, cette structure soutenant une pluralité de charges explosives.

Quand l'hélicoptère heurte un câble, ce câble glisse le long de la structure jusqu'à une charge explosive qui explose à son contact pour le sectionner.

Ce premier dispositif répond au besoin mais peut s'avérer dangereux, des éléments métalliques pouvant détériorer l'hélicoptère au moment de l'explosion.

De plus la structure porteuse s'avère lourde, encombrante et très peu aérodynamique.

On connaît par le document WO2006/068507 un deuxième dispositif pour couper les câbles.

Ce deuxième dispositif préconise l'emploi de paires d'électrodes montées sur le fuselage pour couper un éventuel câble.

Ce deuxième dispositif diffère totalement du premier dispositif mais nécessite une installation électrique contraignante.

En outre, ce deuxième dispositif tend à présenter des risques pour le personnel évoluant au sol à proximité de l'aéronef.

On connaît un troisième dispositif par le document US4826103.

Ce troisième dispositif comporte une mâchoire pourvue d'une partie supérieure et d'une partie inférieure qui délimitent une gorge. De plus le troisième dispositif est muni d'un couteau mis en mouvement par une charge explosive pour sectionner un câble dans la gorge.

La présence d'un explosif rend l'utilisation de ce troisième dispositif délicate voire dangereuse ainsi qu'une maintenance relativement lourde.

Enfin, on connaît par le document FR 2443309, qui est considéré comme l'état de la technique le plus proche, un quatrième dispositif destiné à couper un câble se trouvant en état de tension mécanique qui comporte une paire d'arêtes coupantes fixes et coopérantes.

Ces deux arêtes coupantes sont alors disposées de façon à faire entre elles un angle produisant un effet de plan incliné ou de coin tout en présentant une face tranchante à un câble prenant contact avec ces arêtes coupantes. Les deux arêtes coupantes progressent alors jusqu'à un point de jonction de ces arêtes.

Ces deux arêtes visent à sectionner au moins en partie un câble avant que ce câble atteigne un point de jonction des arêtes et se rompe sous l'action d'une tension mécanique. Pour atténuer les contraintes, la jonction des arêtes peut comporter une découpure.

On connaît aussi le document US 4 760 644 qui présente un dispositif coupant hydraulique.

Ce dispositif comporte une branche mobile supérieure munie d'une arête coupante supérieure amont mobile, puis une arête coupante supérieure aval mobile qui est arrondie.

De plus, le dispositif comporte une branche mobile inférieure munie d'une arête coupante inférieure amont mobile, puis une arête coupante inférieure aval mobile qui est arrondie.

On connaît aussi les documents RU 2 253 594 et EP 2 165 930.

La présente invention a alors pour objet de proposer un dispositif sectionneur de câbles alternatif visant notamment à réduire les tensions mécaniques observées parfois sur des dispositifs connus.

En effet, on comprend que ces tensions mécaniques induisent un renforcement du dispositif sectionneur de câbles, voire un renforcement de la structure de l'aéronef qui accueille ce dispositif sectionneur de câbles.

Selon l'invention, un dispositif sectionneur de câbles pour aéronef est muni d'une mâchoire comportant une partie supérieure et une partie inférieure qui délimitent conjointement une gorge. Ce dispositif est de plus pourvu d'une première et d'une deuxième arêtes coupantes amont fixes et coopérantes saillant dans ladite gorge pour produire un effet de plan incliné ou de coin tout en présentant une face tranchante à un câble prenant contact avec ces première et deuxième arêtes coupantes amont.

Ce dispositif est remarquable en ce que, la première arête coupante amont et la deuxième arête coupante amont sont séparées l'une de l'autre et forment une zone de coupe amont. Le dispositif sectionneur de câbles comporte de plus une zone de coupe aval munie d'une arête coupante aval fixe décrivant un arc de cercle, l'arête coupante aval s'étendant de la première arête coupante amont à la deuxième arête coupante amont.

On note que les termes « amont » et « aval » font référence à la direction de progression d'un câble dans la gorge de la mâchoire. Un tel câble passe alors au travers de la zone de coupe amont, puis éventuellement au travers de la zone de coupe aval le cas échéant.

Ainsi, contrairement à l'enseignement du document FR 2 443 309, l'invention ne prévoit pas deux arêtes coupantes en contact l'une avec l'autre dans une zone de jonction, la zone de jonction étant éventuellement munie d'une découpure.

En effet, l'invention prévoit deux arêtes coupantes amont favorablement en regard l'une de l'autre. Ces deux arêtes coupantes amont ne sont cependant pas en contact l'une avec l'autre. Ces deux arêtes coupantes amont forment alors conjointement une zone de coupe amont.

De plus, le dispositif sectionneur de câbles comporte une zone de coupe aval faisant suite à la zone de coupe amont.

Cette zone de coupe aval est pourvue d'une arête coupante aval de forme circulaire, l'arête coupante aval décrivant un arc de cercle allant de la première arête coupante amont à la deuxième arête coupante amont. L'arête coupante aval est alors en contact avec la première arête coupante amont et la deuxième arête coupante amont.

Dès lors, si un câble pénètre dans le dispositif sectionneur de câbles, ce câble est au moins partiellement coupé dans la zone de coupe amont par les première et deuxième arêtes coupantes amont.

Si ce câble est partiellement découpé dans la zone de coupe amont, le câble entaillé atteint alors la zone de coupe aval. Le câble va alors rompre sous l'effet d'une entaille provoquée par l'arête coupante aval, conjugué éventuellement d'une augmentation de la tension exercée sur le câble.

La présence d'une arête coupante aval tend alors à diminuer les efforts exercés sur le dispositif sectionneur de câbles. Le dimensionnement de ce dispositif sectionneur de câbles ou de la structure accueillant le dispositif sectionneur de câbles peut alors être optimisé.

De plus, on note que certains dispositifs de l'état de la technique peuvent uniquement prévoir des arêtes coupantes situées en regard l'une de l'autre tout en se rejoignant. Dès lors, l'espace séparant une arête coupante de l'autre arête coupante de ces dispositifs connus est minime, voire nul dans la zone de jonction. Par conséquent, il paraît difficile d'affuter les arêtes coupantes au cours du temps.

A l'inverse, la première arête coupante amont et la deuxième arête coupante amont de l'invention ne sont pas en contact l'une avec l'autre. L'espace séparant la première arête coupante amont et la deuxième arête coupante amont peut d'ailleurs être maximisé dans la mesure où le dispositif sectionneur de câbles comprend une zone de coupe aval.

Il devient donc possible de mettre en oeuvre un moyen d'affutage de ces première et deuxième arêtes coupantes amont ainsi que de l'arête coupante aval.

Le dispositif sectionneur de câbles peut de plus comporter une ou plusieurs des caractéristiques additionnelles qui suivent.

Par exemple, la première arête coupante amont ainsi que la deuxième arête coupante amont et l'arête coupante aval sont éventuellement disposées dans un même plan de coupe.

En agençant ainsi toutes les arêtes coupantes dans un même plan de coupe, on évite l'apparition des contraintes latérales susceptibles de produire un moment de basculement d'un câble à couper. Le câble étant rigide, il en résulterait une réaction du dispositif sectionneur de câbles qui tend à basculer dans le sens inverse au basculement du câble.

En l'absence de telles réactions, on peut donc minimiser le dimensionnement du dispositif sectionneur de câbles ou de la structure accueillant ce dispositif sectionneur de câbles.

Selon un autre aspect, la première arête coupante amont ainsi que la deuxième arête coupante amont et l'arête coupante aval peuvent constituer un bloc d'un seul tenant.

En effet, l'invention permet d'obtenir une unique pièce comportant l'ensemble des arêtes coupantes, et un dispositif sectionneur de câbles optimisé notamment d'un point de vue massique.

Par ailleurs, l'arête coupante aval est éventuellement une arête façonnée par une fraise conique.

On note que l'on peut utiliser une telle fraise conique pour obtenir un ensemble d'un seul tenant comportant l'arête coupante aval ainsi que la première arête coupante amont et la deuxième arête coupante amont.

De plus, la première arête coupante amont ainsi que la deuxième arête coupante amont et l'arête coupante aval peuvent constituer des portions usinées de la mâchoire.

Il est effectivement possible d'usiner un bloc de matière pour obtenir un ensemble comportant la mâchoire et toutes les arêtes coupantes.

Les arêtes coupantes sont alors une partie de cette mâchoire.

Selon une variante alternative, on comprend que l'on peut obtenir les arêtes coupantes à partir de lames solidarisées à une mâchoire.

Selon un autre aspect, le dispositif sectionneur de câbles comporte un déflecteur. Le déflecteur peut comprendre un déflecteur inférieur en amont d'une arête coupante amont et un déflecteur supérieur en amont de l'autre arête coupante amont.

Le déflecteur, la mâchoire, la première arête coupante amont, la deuxième arête coupante amont et l'arête coupante aval peuvent constituer un équipement monobloc d'un seul tenant usiné à partir d'un bloc de matière.

Outre un dispositif sectionneur de câbles, l'invention vise aussi un aéronef comportant un tel dispositif sectionneur de câbles.

L'invention et ses avantages apparaîtront avec plus de détails dans le cadre de la description qui suit avec des exemples de réalisation donnés à titre illustratif en référence aux figures annexées qui représentent :
- la figure 1, une coupe schématique d'un hélicoptère muni d'un dispositif sectionneur de câbles,
- la figure 2, une coupe longitudinalement montrant les arêtes coupantes amont et aval d'un dispositif sectionneur de câbles selon l'invention, et
- les figures 3 à 5, des coupes décrivant les arêtes coupantes amont et aval d'un dispositif sectionneur de câbles selon l'invention.

Les éléments présents dans plusieurs figures distinctes sont affectés d'une seule et même référence.

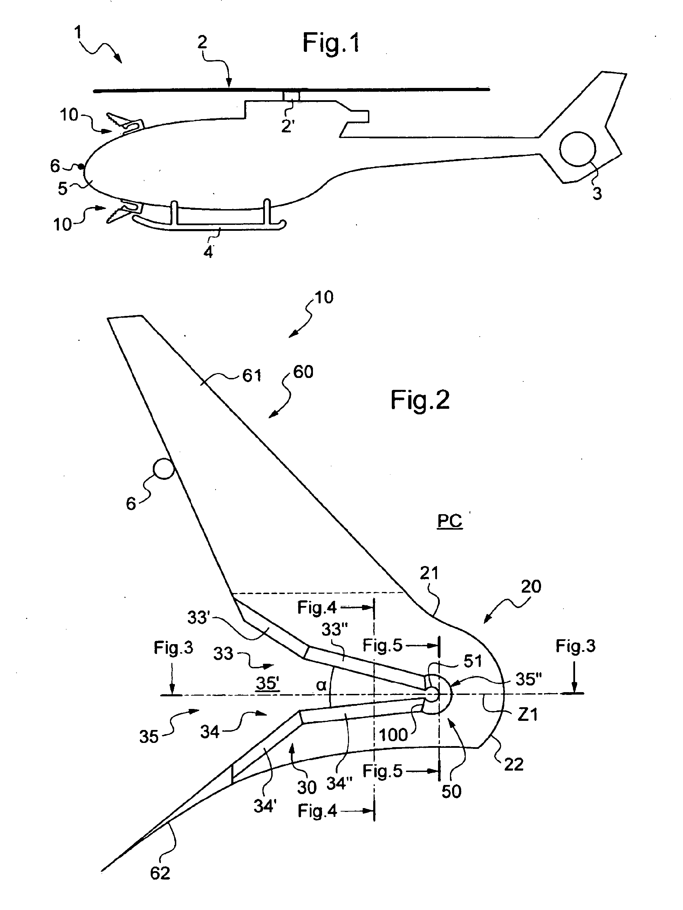

La figure 1 présente un aéronef, plus précisément un hélicoptère 1 muni d'un rotor principal 2 de sustentation et de propulsion et d'un rotor arrière 3.

Le rotor principal 2 est entraîné via une installation motrice par son mât rotor 2'.

Par ailleurs, l'hélicoptère 1 comprend un train d'atterrissage 4.

Afin d'éviter que le mât rotor 2' et le train d'atterrissage 4 soient heurtés par un câble suspendu 6 durant un vol d'avancement, l'hélicoptère 1 est équipé de deux dispositifs 10 sectionneurs de câbles agencés au dessus et en dessous de son cockpit 5.

La figure 2 présente un dispositif 10 sectionneur de câbles selon l'invention.

Ce dispositif 10 sectionneur de câbles 6 comporte une mâchoire 20 comprenant une partie supérieure 21 et une partie inférieure 22 reliées uniquement entre elles via une de leurs extrémités.

Ainsi, les parties supérieure 21 et inférieure 22 délimitent une gorge 35.

La gorge 35 est borgne et présente donc une extrémité amont 35' qui débouche sur l'extérieur et une extrémité aval 35"' qui est obturée par un fond. On remarque que la zone de fixation Z1 de la partie supérieure 21 à la partie inférieure 22 représente le fond de la gorge 35.

On note que la mâchoire schématisée présente une partie supérieure 21 et une partie inférieure 22 distinctes, liées l'une à l'autre par une de leurs extrémités au niveau de la zone de fixation Z1. Néanmoins, on comprend bien que les parties supérieure et inférieure peuvent être réalisées à partir d'un même bloc de matière pour constituer un ensemble monobloc.

Afin d'être à même de sectionner un câble 6, le dispositif 10 comporte une zone de coupe amont 30 munie d'une première arête coupante amont 33 et d'une deuxième arête coupante amont 34 respectivement solidarisées aux parties supérieure 21 et inférieure 22 de manière à présenter un angle α entre elles.

Ces première et deuxième arêtes coupantes amont 33, 34 sont en saillie dans la gorge 35, plus précisément à l'extrémité amont 35' de la gorge 35.

Chaque arête coupante amont 33, 34 peut présenter une pluralité de sections 33', 33", 34', 34".

De plus, chaque arête coupante amont peut être une arête ménagée sur une ou plusieurs lames solidarisées à la mâchoire 20.

Selon une alternative préférée, chaque arête coupante amont peut être une partie usinée de la mâchoire 20.

Outre les première et deuxième arêtes coupantes amont 33, 34, la mâchoire 20 du dispositif 10 sectionneur de câbles est muni d'une arête coupante aval 51 disposée dans une zone de coupe aval 50.

La zone de coupe aval 50 est alors située à la suite de la zone de coupe amont 30, plus précisément dans l'extrémité aval 35" de la gorge 35.

L'arête coupante aval 51 décrit alors un arc de cercle 100 compris entre 180 degrés et 360 degrés sur l'exemple représenté. Ainsi, cette arête coupante aval s'étend de la première arête coupante amont 33 vers la deuxième arête coupante amont 34.

A l'instar des arêtes coupantes amont 33, 34, l'arête coupante aval peut être ménagée sur une ou plusieurs lames solidarisées au fond de la mâchoire 20, ou être une partie usinée de la mâchoire 20.

Chaque arête coupante est alors fixe à savoir immobile dans la gorge, contrairement à certaines pinces.

Selon une réalisation, la première arête coupante amont 33 ainsi que la deuxième arête coupante amont 34 et l'arête coupante aval 51 constituent un bloc d'un seul tenant. Ce bloc d'un seul tenant peut être une unique lame solidarisée à la mâchoire 20, ou encore une partie de cette mâchoire délimitant la gorge 35.

Il est en effet possible d'usiner un bloc de matière avec une fraise conique pour réaliser une mâchoire 20 intégrant les arêtes coupantes amont 33, 34 et/ou l'arête coupante aval 51.

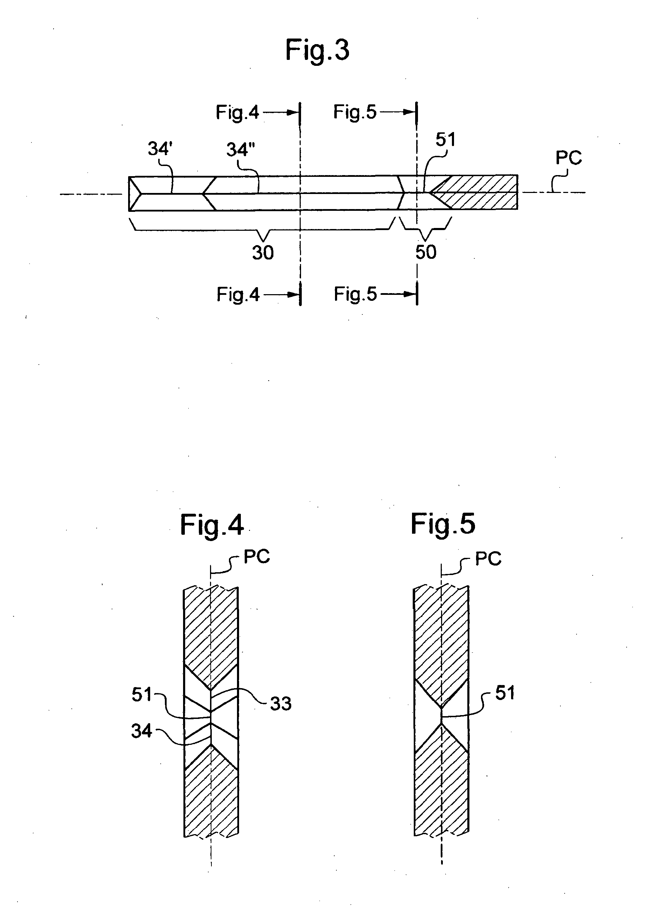

En référence aux figures 2 à 4, la première arête coupante amont 33 ainsi que la deuxième arête coupante amont 34 et l'arête coupante aval 51 sont favorablement disposées dans un même plan de coupe PC pour ne pas induire un basculement néfaste d'un câble 6 au sein de la gorge 35.

Par ailleurs, en référence à la figure 1, pour guider un câble 6 vers la gorge 35, le dispositif 10 est avantageusement pourvu d'un déflecteur 60 dirigé vers l'avant de l'hélicoptère 1.

Ce déflecteur 60 peut comprendre un déflecteur supérieur 61 prolongeant la partie supérieure 21 de la mâchoire 20 ainsi que la première arête coupante amont 33. De plus, ce déflecteur 60 peut aussi comprendre un déflecteur inférieur 62 prolongeant la partie inférieure 22 de la mâchoire 20 ainsi que la deuxième arête coupante amont 34.

Il est à noter que le déflecteur supérieur 61 et le déflecteur inférieur 62 peuvent chacun comprendre un organe coupant pour au moins entailler un câble entrant en contact avec eux.

Le déflecteur 60 peut aussi être une partie constitutive de la mâchoire 20.

On peut alors obtenir un dispositif 10 sectionneur de câbles d'un seul tenant, le déflecteur 60 ainsi que les arêtes coupantes 33, 34, 51 et la mâchoire 20 représentant des parties d'une unique pièce.

Ainsi, le déflecteur 60 guide un potentiel câble 6 suspendu vers la gorge 35 de la mâchoire 20. le câble 6 est alors sectionné par les arêtes coupantes amont 33, 34, et le cas échéant par l'arête coupante aval 51.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif (10) sectionneur de câbles (6) destiné à un aéronef muni d'une mâchoire (20) comportant une partie supérieure (21) et une partie inférieure (22) qui délimitent conjointement une gorge (35), ledit dispositif (10) étant pourvu d'une première et d'une deuxième arêtes coupantes amont (33, 34) fixes et coopérantes saillant dans ladite gorge (35),
**caractérisé en ce que**, la première arête coupante amont (33) et la deuxième arête coupante amont (34) sont séparées l'une de l'autre et forment une zone de coupe amont (30), ledit dispositif (10) sectionneur de câbles comportant une zone de coupe aval (50) munie d'une arête coupante aval (51) fixe décrivant un arc de cercle (100), ladite arête coupante aval (51) s'étendant de la première arête coupante amont (33) à la deuxième arête coupante amont (34).

2. Dispositif selon la revendication 1,
**caractérisé en ce que** la première arête coupante amont (33) ainsi que la deuxième arête coupante amont (34) et l'arête coupante aval (51) sont disposées dans un même plan de coupe (PC).

3. Dispositif selon l'une quelconque des revendications 1 à 2,
**caractérisé en ce que** la première arête coupante amont (33) ainsi que la deuxième arête coupante amont (34) et l'arête coupante aval (51) constituent un bloc d'un seul tenant.

4. Dispositif selon l'une quelconque des revendications 1 à 3,
**caractérisé en ce que** ladite arête coupante aval (51) est une arête façonnée par une fraise conique.

5. Dispositif selon l'une quelconque des revendications 1 à 4,
**caractérisé en ce que** la première arête coupante amont (33) ainsi que la deuxième arête coupante amont (34) et l'arête coupante aval (51) constituent des portions usinées de ladite mâchoire (20).

6. Dispositif selon l'une quelconque des revendications 1 à 5,
**caractérisé en ce que** ledit dispositif (10) sectionneur de câbles (6) comporte un déflecteur (60).

7. Aéronef (1),
**caractérisé en ce que** cet aéronef (1) comporte un dispositif (10) sectionneur de câbles (6) selon l'une quelconque des revendications 1 à 6.

## Patentansprüche

1. Trennvorrichtung (10) für Kabel (6) für ein Luftfahrzeug, welche mit einer Klaue (20) versehen ist, die einen oberen Teil (21) und einen unteren Teil (22) aufweist, die zusammen einen Schlund (35) eingrenzen, wobei die Vorrichtung (10) mit einer ersten und einer zweiten vorderen festen Schnittkante (33, 34) versehen ist, die in den Schlund (35) vorspringend zusammenwirken,
**dadurch gekennzeichnet, dass** die erste vordere Schnittkante (33) und die zweite vordere Schnittkante (34) voneinander getrennt sind und einen vorderen Schnittbereich (30) bilden, wobei die Trennvorrichtung (10) für Kabel einen hinteren Schnittbereich (50) aufweist, der mit einer festen hinteren Schnittkante (51) versehen ist, die einen Kreisbogen (100) beschreibt, wobei die hintere Schnittkante (51) sich von der ersten vorderen Schnittkante (33) bis zu der zweiten vorderen Schnittkante (34) erstreckt.

2. Vorrichtung nach Anspruch 1,
**dadurch gekennzeichnet, dass** die erste vordere Schnittkante (33) sowie die zweite vordere Schnittkante (34) und die hintere Schnittkante (51) in ein und derselben Schnittebene (PC) angeordnet sind.

3. Vorrichtung nach einem der Ansprüche 1 bis 2,
**dadurch gekennzeichnet, dass** die erste vordere Schnittkante (33) sowie die zweite vordere Schnittkante (34) und die hintere Schnittkante (51) einen einstückigen Block bilden.

4. Vorrichtung nach einem der Ansprüche 1 bis 3,
**dadurch gekennzeichnet, dass** die hintere Schnittkante (51) eine Schnittkante ist, die mit einem Kegelfräser geformt ist.

5. Vorrichtung nach einem der Ansprüche 1 bis 4,
**dadurch gekennzeichnet, dass** die erste vordere Schnittkante (33) sowie die zweite vordere Schnittkante (34) und die hintere Schnittkante (51) spanend bearbeitete Bereiche der Klaue (20) bilden.

6. Vorrichtung nach einem der Ansprüche 1 bis 5,
**dadurch gekennzeichnet, dass** die Trennvorrichtung (10) für Kabel (6) einen Deflektor (60) aufweist.

7. Luftfahrzeug (1),
**dadurch gekennzeichnet, dass** das Luftfahrzeug (1) eine Trennvorrichtung (10) für Kabel (6) nach einem der Ansprüche 1 bis 6 aufweist.

## Claims

1. A device (10) for cutting cables (6) intended for an aircraft, provided with a jaw (20) comprising an upper part (21) and a lower part (22) which jointly define a groove (35), said device (10) being provided with a first and a second fixed, cooperating upstream cutting edge (33, 34) which project into said groove (35),
**characterised in that** the first upstream cutting edge (33) and the second upstream cutting edge (34) are separated from one another and form an upstream cutting zone (30), said device (10) for cutting cables comprising a downstream cutting zone (50) provided with a fixed downstream cutting edge (51) which describes an arc of a circle (100), said downstream cutting edge (51) extending from the first upstream cutting edge (33) to the second upstream cutting edge (34).

2. A device according to Claim 1, **characterised in that** the first upstream cutting edge (33) and the second upstream cutting edge (34) and the downstream cutting edge (51) are arranged in one and the same cutting plane (PC).

3. A device according to any one of Claims 1 to 2, **characterised in that** the first upstream cutting edge (33) and the second upstream cutting edge (34) and the downstream cutting edge (51) constitute a block all in one piece.

4. A device according to any one of Claims 1 to 3, **characterised in that** said downstream cutting edge (51) is an edge shaped by an angular milling cutter.

5. A device according to any one of Claims 1 to 4, **characterised in that** the first upstream cutting edge (33) and the second upstream cutting edge (34) and the downstream cutting edge (51) constitute machined portions of said jaw (20).

6. A device according to any one of Claims 1 to 5, **characterised in that** said device (10) for cutting cables (6) comprises a deflector (60).

7. An aircraft (1), **characterised in that** this aircraft (1) comprises a device (10) for cutting cables (6) according to any one of Claims 1 to 6.
